# EUROPEAN PATENT APPLICATION

(11) **EP 4 481 949 A1**
(43) Date of publication of application: **25.12.2024**
(21) Application number: 24181934.1
(22) Date of filing: 13.06.2024
(51) Int. Cl.: H01R 4/26, H01R 43/16, H01R 13/03

(54) **CURRENT-CARRYING CONTACT ELEMENT WITH A STRUCTURED CONTACT SURFACE**

(30) Priority: 19.06.2023 DE 102023115925
(71) Applicant: TE Connectivity Solutions GmbH, 8200 Schaffhausen (CH)
(72) Inventor: OBERST, Marcella Joana, 8200 Schaffhausen (CH); WOLF, Marcus, 8200 Schaffhausen (CH); OSTENDORF, Frank, 8200 Schaffhausen (CH); SCHAEFER, Maik, 8200 Schaffhausen (CH); EHEIM, Manuel, 8200 Schaffhausen (CH); LEIDNER, Michael, 8200 Schaffhausen (CH); BURESCH, Isabell, 8200 Schaffhausen (CH)
(74) Representative: Grünecker Patent- und Rechtsanwälte PartG mbB

(57) **Abstract**

The subject matter relates to a current-carrying contact element (100) having at least one contact surface (110, 110') for electrically contacting two opposing electrical conductors (1000, 1000') in a contact direction (200). The contact element (100) comprises a base body (102) having a structured contact surface (110), the structured contact surface (110) having a plurality of collecting recesses (120) for receiving oxide between a plurality of contact protrusions (104) projecting in the contact direction (200), each contact protrusion (104) having a contact point (106) for contacting the conductor (1000) at the contact point (106); a nickel layer applied to the structured contact surface (110), the nickel layer for hardening the contact protrusions (104) so that the coated contact protrusions (104) break an oxide layer (1100) on the conductor (1000) to be contacted upon connection to the conductor (1000) to expose a bare mating contact point, and the nickel layer for sealing the contact points (106) and the bare mating contact points against oxygen; and wherein the ratio of the width (b) at the base (103) of a contact protrusion (104) to the height (h) of the contact protrusion (104) is greater than or equal to 2 and less than or equal to 10.

## Description

The subject matter described herein relates generally to a current-carrying contact element with at least one structured contact surface and a method of manufacturing such a current-carrying contact element.

Different conductor and/or coating materials often come into contact with each other in the electrical power supply network and in the on-board electrical system of electric vehicles when connecting different components. Aluminum is preferred over copper due to its low density and relatively high electrical conductivity as well as its availability and lower price. For users, this lightweight material is challenging in terms of contact and long-term behavior.

In the past, intermetallic phases between aluminum and silver as well as between aluminum and copper were investigated as the primary cause of failures occurring in non-bonded, current-carrying connections with the corresponding material combinations. However, the increase in resistance observed cannot be fully explained by the growing phases.

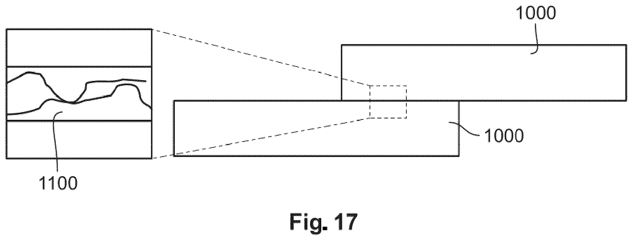

In particular, the contact resistance increases due to oxidation. If conductors, for example bus bars 1000 as shown in Fig. 17, are connected, the surfaces must be treated before each new contacting process in order to remove the oxide layer 1100. For example, wire brushes are used to clean the surface of the aluminum or copper from oxide layers.

The task is therefore to solve the above problems. In particular, the task is to reduce the effort required for contacting. Time-consuming and costly preparatory measures should be minimized. Another task is to ensure that the contacts are stable over a long period of time. A further task is to ensure that the quality of the contacting remains consistent with repeated contacting.

The above tasks are solved by the subject matter of the independent patent claims. Advantageous further embodiments are the subject of the dependent patent claims.

According to one general aspect, a current-carrying contact element solves the above problems. The contact element has contact protrusions with a nickel layer that can break the oxide layer on the conductor to be contacted to form metallic contact points, since nickel is harder than the aluminum of the conductor. The hard nickel in relation to the soft aluminum, which lies under the oxide layer, causes the softer aluminum to flow and this flow breaks up the oxide. This results in good contacting (contact resistance less than 5 µΩ). In addition, the nickel layer enables long-term stability, as nickel can surprisingly seal the bare mating contacts against oxygen and therefore no new oxide layers can grow. With special dimensions of the contact protrusions, it is possible to achieve the conditions of low connection resistance and high long-term stability, as the contact protrusions withstand contact pressure forces in particular when the opposing conductors are pressed together and fulfill requirements for resistances along the electrical path.

A first aspect relates to a current-carrying contact element with at least one contact surface, in particular two opposing contact surfaces, for electrically contacting two opposing electrical conductors in a contact direction. The two conductors are brought together, i.e. moved towards each other in the contact direction, so that the contact element experiences a compressive force in the contact direction. The conductors can be brought together by a screw or a clamp, for example. In other words, pressure is applied perpendicular to the contact surfaces of the contact element. It is also possible for the contact element to be formed in one piece with one of the conductors. In other words, a contact surface of the contact element makes contact with a conductor. In other words, the conductor comprises the contact element at one end.

A current-carrying contact element can also be referred to as a current-carrying contact securing element. The contact element must be distinguished from a screw lock, which is intended to prevent the unintentional loosening or loosening of a screw connection, as a screw lock is placed between the screw head and the element to be contacted. Similar to screw locking is that the contact element is intended to prevent the unintentional deterioration of a connection. In addition to the property of securing the long-term contacts, the contact element, as explained below, enables electrical connection properties to be optimized and preparatory steps to be minimized.

In particular, the contact element comprises or consists of a base body with at least one structured contact surface. Both opposing contact surfaces can also be structured. In this context, a structured contact surface is understood to be a surface that is machined by a machining process such as embossing, etching, milling or the like in order to produce structures with a defined shape. Advantageously, both opposing contact surfaces of the base body are structured.

The defined shape of the structured contact surface is a plurality of collecting recesses between a plurality of contact protrusions that protrude in the contact direction. For example, the collecting recesses can be created by pressing the contact surface. This enables a cost-effective process to create the indentations and protrusions, as only one process step is required for structuring and a stamp (also referred to as punch) can be used repeatedly. Alternatively, ablative processes can of course also be used, which can enable greater accuracy compared to embossing, but are also usually more expensive, as masking steps and etching steps are required, for example.

The structure makes it possible for oxide, which is removed from the conductor to be contacted, to be absorbed in the recesses and for a contact point to be provided at each contact protrusion in order to contact the conductor at the contact point. The structure is thus optimized for two tasks, namely that the contact points are as large as possible over the surface in order to minimize the contact resistance. Furthermore, the recesses are designed in such a way that they provide sufficient space to completely absorb the removed oxide. The recesses are therefore usually deeper than they are wide.

The exact shape of the indentation is determined by the manufacturing process. For example, an embossed recess is in the shape of a triangular prism. In other words, in a section perpendicular to the contact surface, the recess has the shape of a triangle, wherein the angle in the collecting recess between a surface normal of the contact surface and an edge of the collecting recess is less than or equal to 45°, preferably less than 30°, most preferably less than 10°, in particular wherein the structure is produced by embossing.

For example, if the manufacturing process is an etching process, the recess can be a trench, i.e. an approximately rectangular shape in the section perpendicular to the contact surface, whereby the rectangle is an aspect ratio of width to depth greater than or equal to 0.05 and less than or equal to 0.15. When milling, any shape with a circumferential shape that forms a polygon can be produced.

Furthermore, the contact element comprises a nickel layer that is applied to the structured contact surface. A nickel layer can, for example, be applied using an electroplating process. Here, the base body, which is made of a material with a high conductivity such as aluminum or copper, is nickel-plated to enable the two effects described below. It should be noted that a body made entirely of nickel achieves the same effects, but has a lower conductivity and therefore the connection resistance is greater than if only a nickel layer is applied to a body made of copper. A nickel layer is defined herein as a layer that comprises nickel. For example, the nickel layer can consist only of nickel. However, the nickel layer can also contain nickel compounds such as NiP or the like. The mass fraction of nickel in the layer is preferably greater than or equal to 50%. It is particularly preferably greater than or equal to 75%. Even more preferably, it is greater than or equal to 90%.

The nickel layer enables the hardening of the contact protrusions so that the coated contact protrusions break open an oxide layer on the conductor to be contacted, which is usually made of a more conductive material such as aluminum or copper, when connecting to the conductor to expose a bare mating contact point. Thus, the nickel layer allows the preparatory steps to be minimized as the surfaces of the conductor to be contacted do not need to be cleaned and the mating contact points are exposed in the bonding step.

The nickel layer also enables microscopic sealing of the contact points and the bare mating contact points against oxygen. Surprisingly, nickel has better properties than silver, for example. This surprising formation of sealed contact points enables the connection to remain stable over longer periods of time.

Due to the significantly higher melting and recrystallization temperature of nickel compared to silver and tin, there is no adhesion between the contact element and the mating contact when the connection is released. Cold welding, as would be expected with tin-plated and silver-plated surfaces due to the higher operating temperatures, can lead to damage to the coating of the contact element when loosening, which impairs reassembly.

The contact protrusions can form bump-shaped (also referred to as rod-shaped in the following) contact pins that protrude in the contact direction. The term pin is used here to describe an elongated object with a predominantly constant, for example round, square or polygonal cross-section. In this case, the dimension of the cross-section is greater than its length. Alternatively, the contact protrusions can form lamellar contact blades that protrude in the contact direction. A lamella is a term for a rib that is repeated within a structure that always has the same form, i.e. it is a periodic structure.

The base of the contact protrusion is defined here as the deepest point of a structure. For example, this is the depth of the embossing, etching, milling or similar. The width of the contact pin is the diagonal. In the case of a round cross-section, this would be the diameter. The width of the contact blade is the distance between two opposite sides of the blade in the direction of the structure with the repeating form. In both cases, the width is measured perpendicular to the contact direction, i.e. parallel to the contact surface. When embossing, the width of the contact protrusion results from the width of the pattern in the embossing die, which structures the contact protrusions, as embossing takes place in the contact direction.

The height is equal to the depth to which the structure is created. As defined above, this size depends on the width of the contact protrusion and is achieved via the selected process. For example, this is defined by the force with which an embossing die is applied, how long the etching takes or how hard the contact element is.

It has been found that the ratio of the width at the base of a contact protrusion to the height of the contact protrusion must be greater than or equal to 2 for the protrusion to be sufficiently stable to withstand the contact pressure when the conductors are pressed together. In other words, above this ratio, the oxide layer collapses first and the contact protrusion is stable. It has also been found that the ratio of the width at the base of a contact protrusion to the height of the contact protrusion must be less than or equal to 10 in order to transfer sufficient force to the oxide layer to break it. With a larger ratio, not enough force would be transferred in the contact point, the oxide layer could not be absorbed in the collecting recesses but would remain at the contacting position, and/or the contact points could not be sealed due to the remaining oxide layer.

According to a preferred example, the ratio of the width at the base of a contact protrusion to the height of the contact protrusion is greater than or equal to 3. Particularly preferred is the ratio greater than or equal to 4.

According to a further preferred example, the ratio of the width at the base of a contact protrusion to the height of the contact protrusion is less than or equal to 8. The ratio is particularly preferred to be less than or equal to 6.

According to a second aspect, in addition to the first aspect, the base body has a through-opening that connects the two contact surfaces. The through-opening is preferably formed before structuring. The through-opening enables a fastening means, such as a screw, to be passed through the contact element. This allows the conductors to be pressed together with a predetermined force, which can be defined by the fastening means. This allows the contact protrusions to transmit enough force to break the oxide layer on the conductor, the contact protrusions are not deformed, allowing repeated use of the contact element, and the nickel layer seals the mating contact points, allowing long-term contacting. The through-opening is first created and then structured. Due to the smaller surface area that has to be deformed during embossing, the surface pressure can be increased with the same force and thus a better structure can be achieved.

Advantageously, the through-opening has a diameter of greater than or equal to 0.5 cm and/or less than or equal to 1.5 cm. This means that standard screws of sizes M5 to M15 can be used.

According to a third aspect, in addition to one of the above aspects, a distance between two adjacent contact points is greater than or equal to 0.5 mm and/or less than or equal to 1.5 mm. A smaller distance increases the number of recesses to accommodate oxide. With a larger distance, fewer contact points need to be sealed. Preferably, the distance between two adjacent contact points is greater than or equal to 0.75 mm and/or less than or equal to 1.25 mm.

According to a fourth aspect, in addition to any of the above aspects, the plurality of contact protrusions comprise at least three adjacent contact pins, wherein a first distance between a first contact point on a center contact pin and a first adjacent contact point on a first adjacent contact pin is unequal to a second distance between the center contact point and a second adjacent contact point on a second adjacent contact pin to enable an asymmetrical arrangement of the contact points. This arrangement enables oxide layers to be broken open at a large number of new points on the conductor during renewed contacting, during which the contact element is usually displaced slightly, and thus this arrangement enables the oxide layer to be broken open continuously.

According to a fifth aspect, in addition to the second and fourth aspects, the adjacent contact pins are arranged on a radius connecting the through-opening and the edge of the connection securing device. The contact element rotates around the through-opening and thus it is sufficient to break this axis of symmetry to ensure that the oxide layer is continuously broken during repeated connections. This simplifies the design of the mask, for example the stamping die, and makes it possible to increase the number of contact protrusions per surface.

It is particularly preferred if the first distance is greater than or equal to 0.5 mm, less than or equal to 1.5 mm and/or the second distance is greater than or equal to 1.5 times the first distance.

According to a sixth aspect, in addition to the second aspect, the plurality of contact protrusions comprise at least two adjacent contact blades, wherein the contact blades do not form a circular line around the through-opening and do not form radii starting from the through-opening to enable an asymmetrical arrangement of the contact points. This enables the same effects as the fifth aspect. It is particularly preferred if a distance between two adjacent contact points on the contact blade is greater than or equal to 0.5 mm and/or less than or equal to 1.5 mm.

According to a seventh aspect, in addition to the second to sixth aspects, the structured contact surface around the through-opening is a ring having a width of greater than or equal to 0.2 cm and/or less than or equal to 5 cm. A lower limit of the ring width is necessary to create sufficient contact surface. The upper limit facilitates the contact force per surface area to be increased. A ring with a width of greater than or equal to 1 cm and/or less than or equal to 2 cm is particularly preferred.

According to an eighth aspect, in addition to one of the above aspects, the material of the base body comprises aluminum and/or copper. This enables the conductivity in the base body to be increased. For stability reasons, it is advantageous if the base body has at least a thickness of greater than or equal to 1 mm. Additionally or alternatively, the thickness of the base body can be less than or equal to 5 mm in order to enable a compact design.

According to a ninth aspect, in addition to one of the above aspects, the height of the contact protrusions may be greater than or equal to 0.01 mm and/or the height of the contact protrusions may be less than or equal to 1 mm. A lower height of the contact protrusion may facilitate an easy manufacture. A greater height facilitates larger quantities of oxides to be accommodated in the recesses and thus keeps the recesses open even with repeated use. Particularly preferably, the height of the contact protrusions is greater than or equal to 0.05 mm and/or the height of the contact protrusions is less than or equal to 0.5 mm. It is even more preferable if the height of the contact protrusions is greater than or equal to 0.075 mm and/or the height of the contact protrusions is less than or equal to 0.25 mm.

Additionally or alternatively, the nickel layer can have a thickness of greater than or equal to 0.1 µm and/or the nickel layer has a thickness of less than or equal to 10 µm.

A tenth aspect relates to an electrical connection system comprising a current-carrying contact element according to one of the preceding aspects and two opposing electrical conductors, wherein the conductor contacting the embossed contact surface may comprise aluminum. Preferably, both conductors are made of aluminum and both contact surfaces are embossed. It is particularly surprising that connections made of aluminum and nickel are stable over a long period of time. It should be understood that the description of the connection system is not limited to the conductor containing aluminum. Other metals, for example copper and nickel, are also stable over long periods of time.

An eleventh aspect relates to an electrical connection system according to the tenth aspect, further comprising a screw for mechanically connecting the electrical conductors. As described above, the screw enables a force transmission to break the oxide layer.

A twelfth aspect relates to an electrical connection system according to the tenth or eleventh aspect, wherein at least one of the electrical conductors is a bus bar. The system can thus be used particularly in high-current applications, such as electro mobility.

A thirteenth aspect relates to a method of manufacturing a current-carrying contact element according to any of the above aspects, the method comprising the steps of:
structuring a base body to form a structured contact surface, the structured contact surface having a plurality of collecting recesses for receiving oxide and a plurality of contact protrusions for contacting the conductor;
coating the structured, in particular embossed, contact surface with nickel to form a nickel layer, the nickel layer for hardening the contact protrusions so that the coated contact protrusions break an oxide layer on the conductor to be contacted when connected to the conductor; and
wherein the ratio of the width (b) at the base of a contact protrusion to the height (h) of the contact protrusion is greater than or equal to 2 and less than or equal to 10.

For further details, it is referred to the above description of aspects 1 to 12.

A fourteenth aspect relates to the method according to the thirteenth aspect, wherein the structured contact surface of the base body is structured to produce a collecting recess in a section perpendicular to the contact surface, wherein the angle in the collecting recess between a surface normal of the contact surface and an edge of the catching depression is less than or equal to 45°, preferably less than 30°, most preferably less than 10°, in particular wherein the structure is produced by embossing.

As described above, the collecting recesses have an approximately triangular shape at the lowest point, also referred to below as the base. The flank of the collecting recess and the normal of the contact surface describe a triangle. A small angle allows the contact surface to be maximized, which results in a lower line resistance.

A fifteenth aspect relates to the method according to the thirteenth or fourteenth aspect, wherein the collecting recesses are realized by an embossing process. This is particularly cost-effective.

Alternatively, a recess can be etched. Etched depressions often form a trench, as described above. Such a trench can be described analogously as a triangle of the fourteenth aspect, namely by the deepest point connected to the flanks.

In addition, a through-opening can be formed in the base body before embossing.

For a better understanding of the present invention, it is explained in more detail using the embodiment examples shown in the following figures. The same parts are provided with the same reference signs and the same component designations. Furthermore, some features or combinations of features from the different embodiments shown and described may represent independent inventive solutions or solutions according to the invention.

It shows:
- **Fig. 1**: a connection system according to one aspect;
- **Fig. 2**: a top view of a connecting element according to one aspect;
- **Fig. 3**: a detail III of the connecting element from Fig. 2 corresponding to a first example;
- **Fig. 4**: a detail III of the connecting element from Fig. 2 corresponding to a second example;
- **Fig. 5**: a sectional view along the sectional axis V-V of Figures 3 or 4;
- **Fig. 6**: an embossing die to produce a structured surface of a connecting element according to the first example;
- **Fig. 7**: detail U of the embossing die from Fig. 6;
- **Fig. 8**: sectional view along the sectional axis A-A of Fig. 6;
- **Fig. 9**: an embossing die for producing a structured surface of a connecting element according to a variation of the first example;
- **Fig. 10**: detail X of the embossing die from Fig. 9;
- **Fig. 11**: sectional view along the sectional axis A-A of Fig. 9;
- **Fig. 12**: an embossing die to produce a structured surface of a connecting element according to the second example;
- **Fig. 13**: detail V of the embossing die from Fig. 12;
- **Fig. 14**: sectional view along the sectional axis A-A of Fig. 12;
- **Fig. 15**: an embossing die for producing a structured surface of a connecting element according to a variation of the second example;
- **Fig. 16**: detail W of the embossing die from Fig. 15; and
- **Fig. 17**: a connection system according to the state of the art.

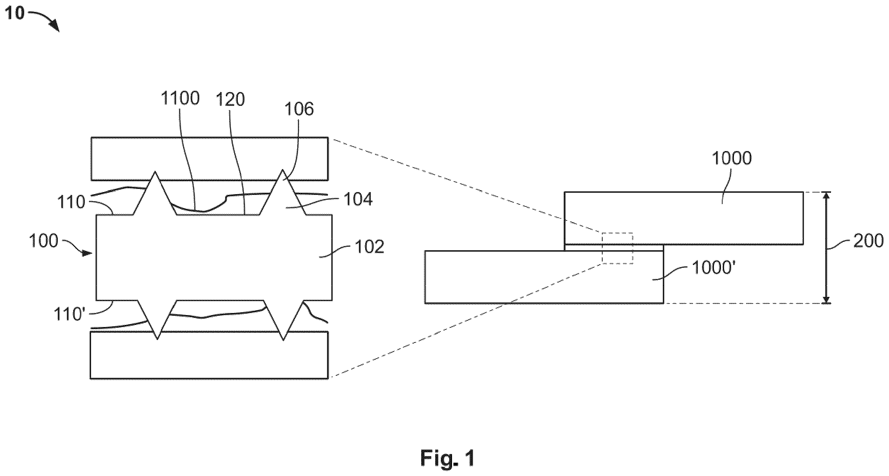

The contact element is now described with the aid of the figures. Fig. 1 shows an electrical connection system with conductors 1000, 1000', which are connected in the contact direction in a similar way to the system in Fig. 17. In addition, the system 10 comprises a current-carrying contact element 100.

As shown in Fig. 1, the current-carrying contact element 100 has two opposing contact surfaces 110, 110'. One contact surface 110, 110' is used to make electrical contact with an opposing electrical conductor 1000, 1000'. Contact is made when the opposing electrical conductors 1000, 1000 are moved towards each other in the contact direction 200. As shown in Fig. 1, the contact direction 200 is perpendicular to the surface of the two opposing contact surfaces 110, 110'.

As further shown in Fig. 1, the contact element 100 has a base body 102 with the contact surfaces 110, 110', which are structured. In particular, a plurality of contact protrusions 104 protrude from the base body 102 in the contact direction 200. Each contact protrusion 104 has a contact point 106 for contacting the conductor 1000 at the contact point 106. The contact point 106 is to be understood here as the point or the surface on the contact element 100 which is electrically connected to a mating contact point, not shown, which is formed on the conductor 1000, 1000'. Electrically connected means that current can be conducted through the connection at the contact point and mating contact point when the contact element 100 is connected to at least one of the conductors 1000, 1000'.

Furthermore, the structured contact surface 110, 110' has a plurality of collecting recesses 120, which do not contribute significantly to the current flow. The collecting recesses 120 serve to collect at least parts of the oxide layer 1100.

Furthermore, a nickel layer, not shown, is applied to the structured contact surface 110, 110'. The nickel layer serves to harden the contact protrusions 104, so that the coated contact protrusions 104 break open the oxide layer 1100 on the conductor 1000 to be contacted when connected to the conductor 100 in order to expose a bare mating contact point not shown.

If the two conductors 1000, 1000' are now moved towards each other in the contact direction 200, the contact protrusions 104 break through the oxide layer 1100. The resistance between conductor 1000, 1000' and contact element 100 is therefore reduced, since the electrical contact is not made via the insulating oxide layer 1100, but the contact point 106 makes direct contact with the bare mating contact point of the conductors 1000, 1000'.

Surprisingly, it was found that a nickel layer enables the contact point 106 and the bare counter-contact point to be sealed against oxygen for a long time, making the connection stable over the long term. Previously, nickel was expected to be inferior to more noble metals such as silver. The long time is therefore defined in relation to an equal contact with silver.

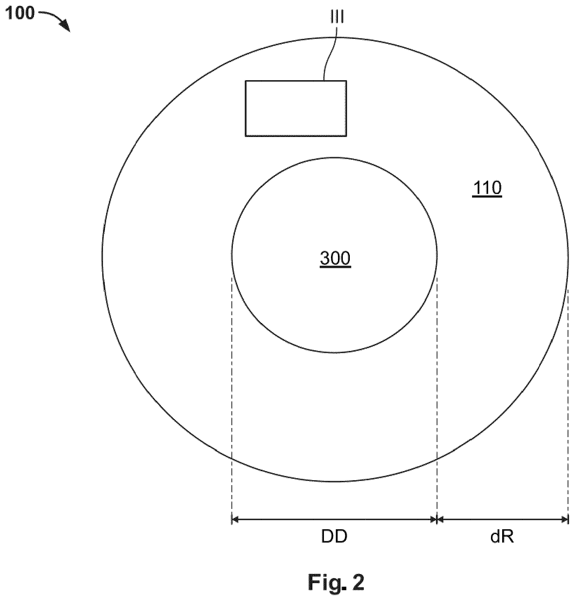

In order to utilize the above effects, the contact protrusions 104 are designed as shown in Figures 2 to 5. Considerations underlying the structuring of the contact element are, for example, that an effective contact surface, i.e. the sum of the surfaces of the contact points, is as large as possible. Furthermore, the contact points must transmit sufficient force per surface area to break through the oxide layer. Furthermore, the collecting recesses must provide sufficient space to catch oxide layers so that the connection between the contact and mating contact is sealed.

First, the contact surface 110 is described in general terms in Fig. 2. As already described for Fig. 1, the conductors are moved towards each other in the contact direction in order to break through the oxide layer on the conductors. In order to control the movement and thus the force, the contact element 100 therefore has a through-opening 300, as shown in Fig. 2. The through-opening 300 extends through the contact surface 110 and the opposite contact surface so that a screw can be passed through through-opening 300.

The through-opening 300 therefore allows a fastening means, such as a screw, to be inserted to connect the conductors. When the screw is tightened, the conductors move towards each other and the contact protrusions can break through the oxide layer.

It should be noted that the contact element does not necessarily require a through-opening so that the conductors can be moved towards each other. For example, a screw clamp could also be used to move the conductors towards each other.

A through-opening 300 is advantageous because handling of the conductors 1000, 1000' is simplified and the space requirement is reduced. For example, a screw diameter can be specified by the diameter DD of the through-opening 300. It has been found that a diameter DD of greater than or equal to 0.5 cm and/or less than or equal to 1.5 cm is advantageous so that commercially available screws of sizes M5 to M15 can be used.

Furthermore, the area of the structured contact surface 110 can be defined in a simple manner by a through-opening 300, namely as a ring with a width dR around the through-opening 300. It is advantageous if the ring has a width dR of greater than or equal to 0.2 cm and/or less than or equal to 5 cm. Such a ring-shaped contact surface 110 enables the force to be transmitted symmetrically to the fastening means. As explained above, a narrow ring can slightly increase the force per surface area. On the other hand, a wide ring enables a larger effective contact surface.

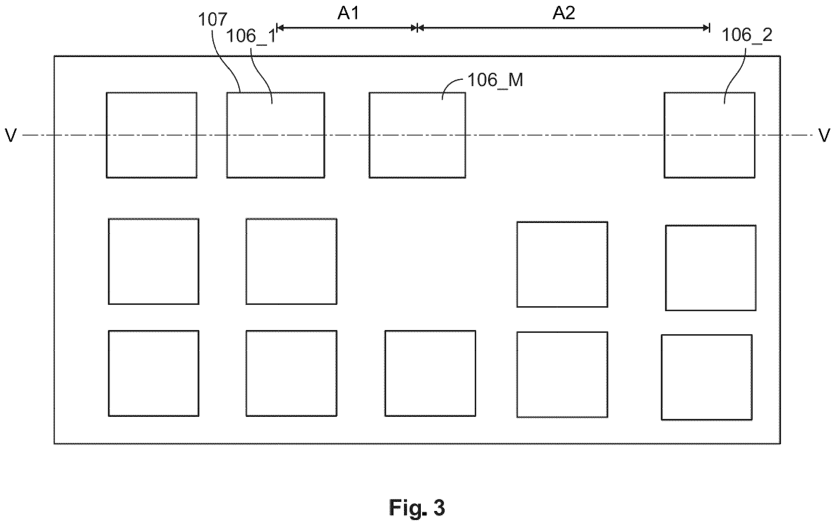

The structures of the contact surface 110 are shown in Figures 3 to 5. The contact element without structure is only shown in Fig. 2 for illustration reasons.

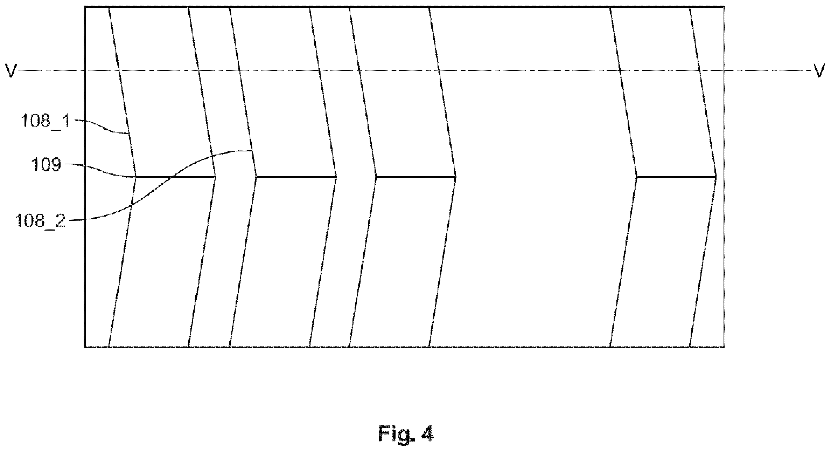

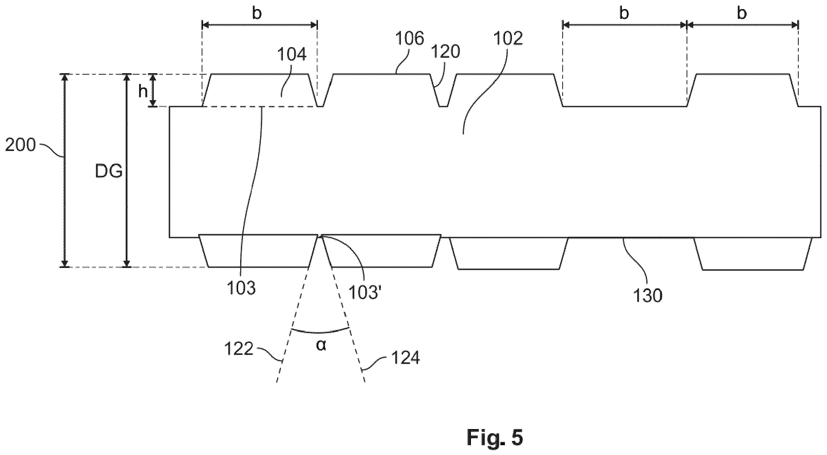

Figures 3 and 4 are top views of the structure corresponding to two examples. Figure 3 shows contact pins 107 and Figure 4 shows contact blades 108_1, 108_2. Figure 5 is a sectional view along the line V-V in Figures 3 and 4. The two examples may be the same in the sectional view of Fig. 5 and both examples are described with reference to Fig. 5.

In the examples shown in Fig. 5, the two contact surfaces 110, 110' have the same design. This is a particularly cost-effective and efficient solution, as only the contact element 100 needs to be structured and coated. However, in order to achieve the effects discussed in this description, it is sufficient for only one of the contact surfaces to have the structure described below. Alternatively or additionally, for example, one of the conductors can also have the structure described.

As shown in Fig. 5, each contact protrusion 106 is described by the ratio of the width b at the base 103 of the contact protrusion 104, which is indicated by the dotted line between the base body 102 and the contact protrusion 104, and the height h of the contact protrusion 104.

As described above, the stability of the structure increases with the width b and the effective contact surface increases. At the same time, as width b increases, the space available to absorb oxide is reduced, the circumference of the contact points that need to be sealed increases and the surface force decreases.

As described above, as the height increases, the space for the oxide layer increases and the stability of the contact protrusion decreases. Based on these considerations, the optimum ratio of width b to height h is greater than or equal to 2 and less than or equal to 10. As explained above, the ratio can advantageously be greater than or equal to 3 and less than or equal to 8 and even more advantageously greater than or equal to 4 and less than or equal to 7. Any combination of the lower value and the upper value is possible because, as explained above, the lower limit is determined by other effects than the upper limit.

The width b is usually specified, whereby the width b is defined perpendicular to the contact direction 200. It is preferable if the width is greater than 0.25 mm and/or less than or equal to 1.5 mm. This results in the height h of the contact protrusions.

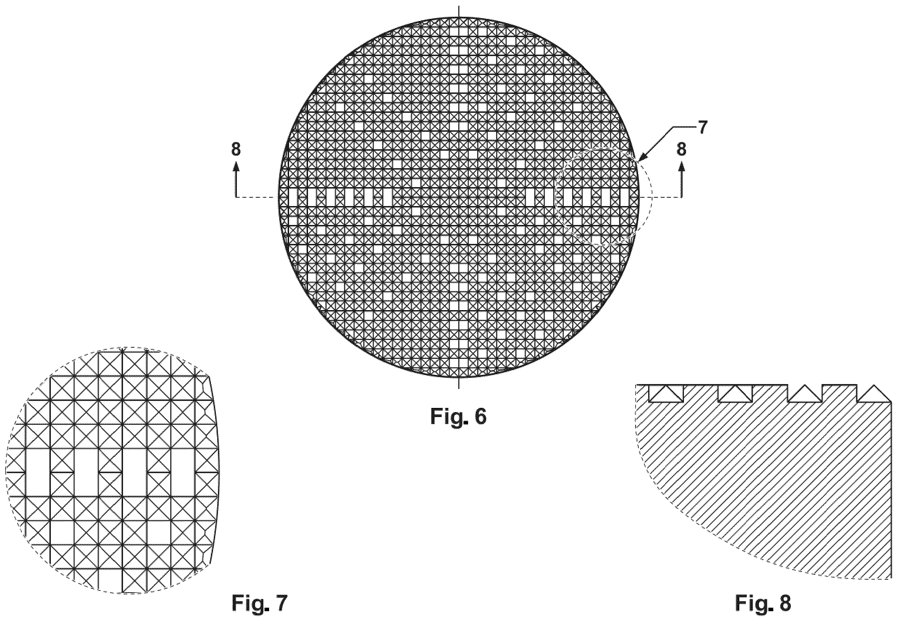

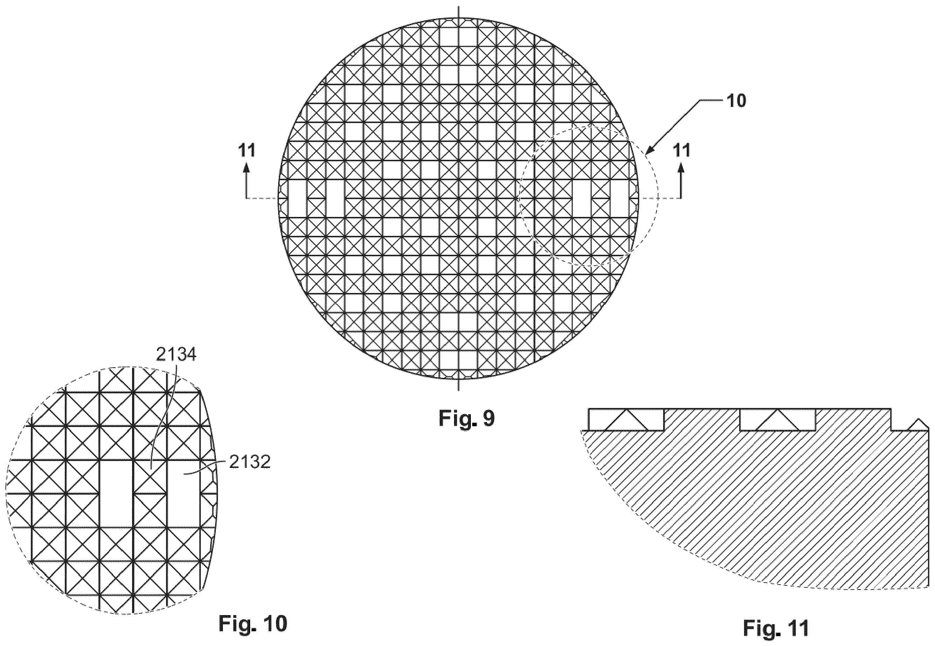

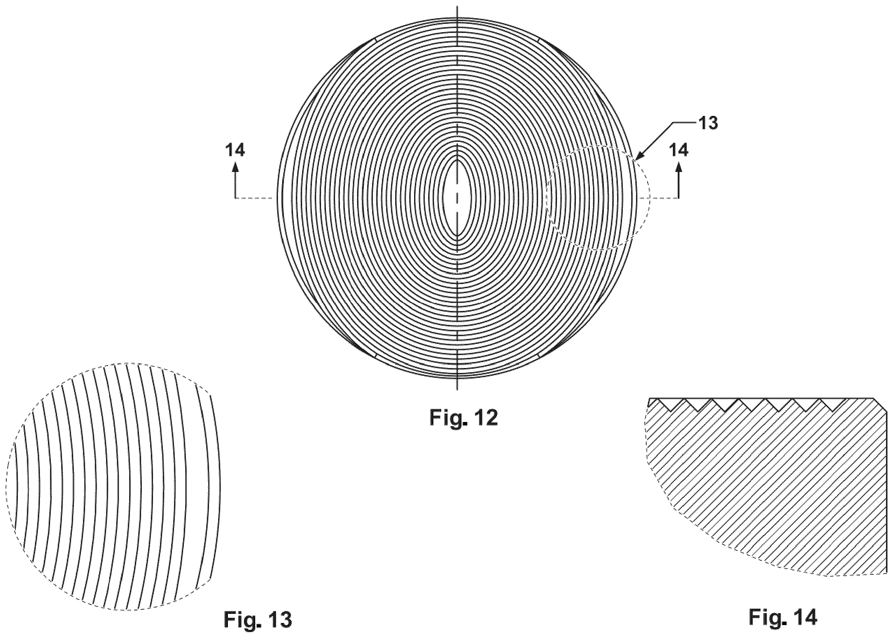

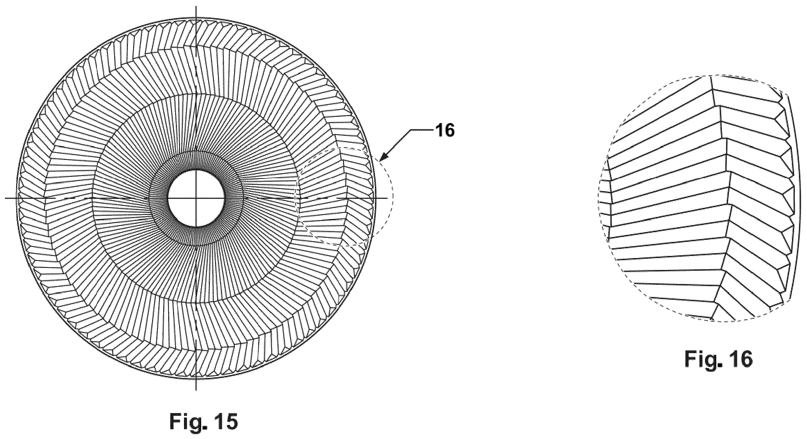

If the structure is embossed, the width b is defined by the embossing stamp. Figures 6 to 16 show different types of embossing stamps. For example, the stamp in Figures 6 and 12 produces structures with a width at the base of 0.5 mm. Alternatively, the stamp in Fig. 9 produces structures with a width at the base of 1.0 mm. Alternatively, the structure can also be defined using a dimensions in gterms of an angle, as shown in Fig. 16.

Alternatively, the structure can be etched, for example. The width b is then defined by a mask. The same can be defined for other structuring processes.

Furthermore, the structuring process results in the shape of the collecting recesses 120, which serve to receive the oxide. A collecting recess 120, which is arranged between two adjacent and adjoining contact protrusions 104, has a triangular shape in section with legs 122, 124, wherein the angle in the collecting recess between a surface normal of the contact surface and an edge of the collecting recess is less than or equal to 45°, preferably less than 30°, most preferably less than 10°, in particular wherein the structure is produced by embossing.

The corresponding height h of the contact protrusion is obtained through the structuring process. As shown in Fig. 5, the height h is defined here in the contact direction 200. If the height h rather than the width b is to be defined, a height h is preferably selected such that the height h of the contact protrusions is greater than or equal to 0.01 mm and/or the height h of the contact protrusions is less than or equal to 1 mm. This means that the width b of the contact protrusions also results from the height h.

Not shown in Fig. 5 is the nickel layer, which is preferably applied after structuring. The nickel layer has a thickness of greater than or equal to 0.1 µm and/or the nickel layer has a thickness of less than or equal to 10 µm.

The thickness of the base body DG, which is preferably greater than or equal to 1 mm and/or less than or equal to 5 mm, is also measured in the contact direction 200. The thickness is usually measured before the structuring process.

As described above, there are adjacent contact protrusions 104 with a contact base 103'. The distance between two neighboring, adjacent contact protrusions 104 is essentially equal to the size B. This distance then also defines the distance between neighboring, adjacent contact points 106. The contact point is defined here as the center of gravity of the contact protrusion in the contact surface. Preferably, this distance is greater than or equal to 0.5 mm and/or less than or equal to 1.5 mm.

In addition, a gap 130, as shown in Fig. 5, may also be formed between two adjacent contact protrusions 104. This gap can be created, as in the detailed view X of Fig. 7, by a cylindrical punch protrusion 2132 arranged between pyramid-shaped punch protrusions 2134.

The function of the gap 130, as for example shown in Fig. 5, is described by way of example with reference to Fig. 3. In the example in Fig. 3, the contact element comprises at least three neighboring contact pins, wherein a first distance A1 between a first contact point 106_M on a middle contact pin and a first neighboring contact point 106_1 on a first neighboring contact pin is unequal to a second distance A2 between the middle contact point 106_M and a second neighboring contact point 106_2 on a second neighboring contact pin. This enables an asymmetrical arrangement of the contact points. This is advantageous if the contact element is used for repeated contacting of conductors. In this case, the contact points 106_1, 106_2, 106_M are the surface centers of the contact protrusion in the contact surface.

It is particularly advantageous if the adjacent contact pins are arranged on a radius that connects the through-opening and the edge of the connection lock. An example of such an arrangement is shown by line A-A in Figures 6 and 9.

As an alternative to the gap, an asymmetrical arrangement can be achieved by structuring, as shown in Fig. 4. The contact element comprises two adjacent contact blades 108_1 and 108_2. A bend 109 prevents the contact blades from forming radii starting from the through-opening. A punch to create the structure is shown in Fig. 15, for example. Alternatively, the contact blades do not form a circular line around the through-opening. A punch to create this structure is shown in Fig. 12, for example, whereby elliptical contact blades are created. Here, the distance between the centers of gravity of the counterpoints is the periodic distance between two adjacent, contiguous blades.

The material of the base body 102 and the protrusions 104 comprises aluminum and/or copper.

The method of manufacturing a current-carrying contact element comprises in particular the following steps.

One step is the structuring of a base body 130 to form a structured contact surface, wherein the structured contact surface has a plurality of collecting recesses for receiving oxide and a plurality of contact protrusions for contacting the conductor; the structuring can be carried out by machining or by forming processes.

The method then comprises the step of coating the embossed contact surface with nickel to produce a nickel layer, the nickel layer to harden the contact protrusions so that the coated contact protrusions break an oxide layer on the conductor to be contacted when connected to the conductor.

In the method, the ratio of the width b at the base of a contact protrusion to the height h of the contact protrusion is greater than or equal to 2 and less than or equal to 10.

The method may further comprise structuring the structured contact surface of the base body so as to produce a collecting recess which is triangular in section perpendicular to the contact surface, wherein the angle in the collecting recess between a surface normal of the contact surface and an edge of the collecting recess is less than or equal to 45°, preferably less than 30°, most preferably less than 10°,
This can be achieved, for example, by creating the collecting recesses by embossing or machining.

Even if a base body with two structured surfaces is shown in Fig. 1 above, a base body with only one structured base surface 110 or 110' can also enable the effects discussed above.

The present document is based on the discovery that nickel has the particularly advantageous properties described above. It is not yet known whether other materials such as Au, AgPd, Cr, W and W compounds such as WC, Ag-WC, Ni-WC or other metals also have these advantageous properties, namely that such metals have better properties than known coatings of Ag, Cu or AI. Should this become apparent, the term nickel layer can be replaced by metal layer in the above description, whereby the metal layer comprises at least one of the metals Au, AgPd, Cr, and W.

### List of reference symbols:

| **Reference number** | **Description** |
|---|---|
| 10 | Connection system |
| 100 | Contact element |
| 102 | Base body |
| 103 | Base |
| 103' | Base point |
| 104 | Contact protrusion |
| 106, 106_1, 106_2, 106_M | Contact point |
| 107 | Contact pin |
| 108_1, 108_2 | Contact blade |
| 110, 110' | Contact surfaces |
| 120 | collecting recess |
| 122, 124 | Thigh |
| 130 | Gap |
| 200 | Contact direction |
| 300 | Through-opening |
| 1000, 1000' | Conductors, bus bar |
| 1100 | Oxide layer |
| 2132 | cylindrical stamp highlighting |
| 2134 | pyramid-shaped stamp highlighting |

## Claims

1. Current-carrying contact element (100) with at least one contact surface (110, 110') for electrically contacting two opposing electrical conductors (1000, 1000') in a contact direction (200), comprising the contact element (100):
a base body (102) having a structured contact surface (110), the structured contact surface (110) having a plurality of collecting recesses (120) for receiving oxide between a plurality of contact protrusions (104) projecting in the contact direction (200), each contact protrusion (104) having a contact point (106) for contacting the conductor (1000) at the contact point (106);
a nickel layer applied to the structured contact surface (110), the nickel layer for hardening the contact protrusions (104) so that the coated contact protrusions (104) break an oxide layer (1100) on the conductor (1000) to be contacted upon connection to the conductor (1000) to expose a bare mating contact point, and the nickel layer for sealing the contact points (106) and the bare mating contact points against oxygen; and
wherein the ratio of the width (b) at the base (103) of a contact protrusion (104) to the height (h) of the contact protrusion (104) is greater than or equal to 2 and less than or equal to 10.

2. Contact element (100) according to claim 1, wherein the base body (102) has a through-opening (300) which connects the two contact surfaces (110, 110'), the through-opening (300) for passing through a fastening means for connecting the conductors (1000, 1000'), in particular wherein the through-opening (300) has a diameter (DD) of greater than or equal to 0.5 cm and/or less than or equal to 1.5 cm.

3. Contact element (100) according to any of the preceding claims, wherein a distance (A1) between two adjacent contact points (106) is greater than or equal to 0.5 mm and/or less than or equal to 1.5 mm.

4. Contact element (100) according to any of the preceding claims, comprising at least three neighboring contact pins (107), wherein a first distance (A1) between a first contact point (106_M) on a middle contact pin (107) and a first neighboring contact point (106_1) on a first neighboring contact pin (107) is unequal to a second distance (A2) between the middle contact point (106_M) and a second neighboring contact point (106_2) on a second neighboring contact pin (107) in order to enable an asymmetrical arrangement of the contact points.

5. Contact element (100) according to any of the claims 2 and 4, wherein the adjacent contact pins (107) are arranged on a radius connecting the through-opening (300) and the edge of the contact element, in particular wherein the first distance is greater than or equal to 0.5 mm and/or less than or equal to 1.5 mm and/or wherein the second distance is greater than or equal to 1.5 times the first distance.

6. Contact element (100) according to claim 2, comprising two adjacent contact blades (108), wherein the contact blades (108) do not form a circular line around the through-opening (300) and do not form radii starting from the through-opening (300) in order to enable an asymmetrical arrangement of the contact points, in particular wherein a distance between two adjacent contact points (106) is greater than or equal to 0.5 mm and/or less than or equal to 1.5 mm.

7. Contact element (100) according to any one of claims 2 to 6, wherein the structured contact surface around the through-opening (300) is a ring with a width (dR) of greater than or equal to 0.2 cm and/or less than or equal to 5 cm.

8. Contact element (100) according to one of the preceding claims, wherein a material of the base body (102) comprises aluminum and/or copper, the base body (102) has a thickness of greater than or equal to 1 mm and/or the base body (102) has a thickness (DG) of less than or equal to 5 mm.

9. Contact element (100) according to one of the preceding claims, wherein the height (h) of the contact protrusions (104) is greater than or equal to 0.01 mm, the height (h) of the contact protrusions (102) is less than or equal to 1 mm, the nickel layer has a thickness of greater than or equal to 0.1 µm and/or the nickel layer has a thickness of less than or equal to 10 µm.

10. Electrical connection system (10) comprising a current-carrying contact element (100) according to any of the preceding claims and two opposing electrical conductors (1000, 1000'), wherein the conductor (1000) contacting the structured contact surface (110) of the contact element (100) comprises aluminum.

11. Electrical connection system (10) according to claim 10, further comprising a screw for mechanically connecting the electrical conductors (1000, 1000').

12. An electrical connection system (10) according to any one of claims 10 and 11, wherein at least one of the electrical conductors (1000, 1000') is a bus bar.

13. A method of manufacturing a current-carrying contact element (100) according to any one of the preceding claims, the method comprising the steps of:
Structuring a base body (102) to form a structured contact surface (110), the structured contact surface (110) having a plurality of collecting recesses (120) for receiving oxide and a plurality of contact protrusions (104) for contacting the conductor (1000);
coating the structured contact surface (110) with nickel to form a nickel layer, the nickel layer for hardening the contact protrusions (104) so that the coated contact protrusions (104) break an oxide layer (1100) on the conductor (1000) to be contacted upon connection to the conductor (1000); and
wherein the ratio of the width (b) at the base (103) of a contact protrusion (104) to the height (h) of the contact protrusion (104) is greater than or equal to 2 and less than or equal to 10.

14. The method according to claim 13, wherein the structured contact surface (110) of the base body is structured to produce a collecting recess (120) triangular in section perpendicular to the contact surface, wherein the angle (α/2) in the collecting recess between a surface normal of the contact surface and an edge of the collecting recess is less than or equal to 30°, preferably less than 10°.

15. The method according to claim 13 or 14, wherein the structure of the collecting recesses (120) is produced by embossing.
